# DEMANDE DE BREVET EUROPEEN

(11) **EP 1 085 234 A1**
(43) Date de publication de la demande: **21.03.2001**
(21) Numéro de dépôt: 00402473.3
(22) Date de dépôt: 08.09.2000
(51) Int. Cl.: F16F 15/315, F02B 75/06

(54) **Volant moteur modulaire**

(30) Priorité: 17.09.1999 FR 9911636
(71) Demandeur: Renault, 92100 Boulogne Billancourt (FR)
(72) Inventeur: Maussion, Jacques, 62400 Béthune (FR); Capendu, Bernard, 62940 Haillicourt (FR); Becu, Patrick, 62940 Haillicourt (FR); Logez, Marc, 62160 Bully Les Mines (FR); Lason, Jean, 62920 Choques (FR)

(57) **Abrégé**

L'invention propose un volant moteur (10) pour un moteur thermique à allumage commandé de véhicule automobile, du type qui est destiné à être fixé à une extrémité arrière d'un vilebrequin axial du moteur du véhicule par l'intermédiaire d'au moins un plateau (12) d'entraînement en forme de disque, du type qui comporte une cage (16) d'allumage cylindrique axiale comportant sur sa périphérie (18) au moins un repère (20) périphérique formant mire pour le réglage de l'allumage, et une couronne (22) annulaire axiale de lancement dont la périphérie est conçue pour coopérer avec un dispositif de démarrage, caractérisé en ce qu'il comporte au moins un support (50) en forme de disque qui porte la cage (16), la couronne (22), et un élément (52) d'inertie, et qui est fixé au plateau (12) d'entraînement, pour permettre le montage modulaire de cages (16) d'allumage, couronnes (22) de lancement et éléments (52) d'inertie différents, adaptés chacun à un moteur déterminé, sur des support (50) et plateau (12) d'entraînement communs.

## Description

L'invention concerne un volant moteur pour un moteur thermique à allumage commandé de véhicule automobile.

L'invention concerne plus particulièrement un volant moteur pour un moteur thermique à allumage commandé de véhicule automobile, du type qui est destiné à être fixé à une extrémité arrière d'un vilebrequin axial du moteur du véhicule par l'intermédiaire d'au moins un plateau d'entraînement en forme de disque, du type qui comporte une cage d'allumage cylindrique axiale comportant sur sa périphérie au moins un repère périphérique formant mire pour le réglage de l'allumage, et une couronne annulaire axiale de lancement dont la périphérie est conçue pour coopérer avec un dispositif de démarrage.

On connaît de nombreux exemples de volant moteur de ce type.

Conventionnellement, un volant moteur comporte un corps qui est réalisé en fonte et qui comporte sur sa périphérie une couronne annulaire qui est assemblée par frettage et qui est par exemple dentée sur sa périphérie de façon à pouvoir coopérer avec un pignon d'un démarreur du moteur.

Le volant moteur comporte un corps en fonte dont la masse est d'autant plus grande que le moteur comporte moins de cylindres, de façon que le volant moteur joue le rôle d'un élément d'inertie qui régularise et équilibre la rotation du vilebrequin auquel il est fixé. Le corps du volant moteur comporte généralement un épaulement sur la périphérie duquel sont pratiqués des repères qui remplissent la fonction de mire pour le réglage de l'allumage.

L'inconvénient d'un tel volant moteur est que son diamètre est globalement fonction du moteur auquel il est destiné, notamment du fait des caractéristiques d'inertie que le volant moteur doit présenter, et du fait du diamètre de la couronne annulaire de lancement qui dépend de l'implantation du démarreur sur le bloc moteur du véhicule.

Pour remédier à ces inconvénients, on a proposé une conception modulaire du volant moteur dans laquelle le volant moteur est formé de plusieurs éléments, notamment d'un plateau d'entraînement qui comporte une cage d'allumage cylindrique venue de matière munie sur sa périphérie d'au moins un repère périphérique formant mire pour le réglage de l'allumage, d'un volant d'inertie, et d'une couronne dentée annulaire. La couronne dentée est montée à la presse sur le plateau d'entraînement, et le volant d'inertie est assemblé au plateau d'entraînement par l'intermédiaire de vis qui traversent le volant d'inertie et sont reçues dans des taraudages du plateau d'entraînement.

Un tel volant moteur présente deux inconvénients majeurs.

D'une part, la fabrication du plateau d'entraînement formant cage d'allumage comporte une étape d'emboutissage de celui-ci à la presse, puis une étape de reprise, sur une machine spécifique d'encochage, pour la réalisation d'encoches qui sont destinées à former la mire de réglage de l'allumage.

D'autre part, l'assemblage du volant d'inertie au plateau d'entraînement nécessite, pour assurer une coaxialité satisfaisante des perçages permettant le passage des vis de fixation, d'effectuer préalablement au vissage une opération de mise en position angulaire du volant d'inertie par rapport au plateau d'entraînement, ce qui augmente les temps de fabrication et par conséquent les coûts de réalisation de tels volants moteurs.

Pour remédier à ces inconvénients l'invention propose un volant moteur dont le plateau d'entraînement et la cage d'allumage sont des éléments distincts, et qui comporte des moyens d'indexation angulaire de ses différents éléments les uns par rapport aux autres.

Dans ce but, l'invention propose un volant moteur du type précédemment décrit, caractérisé en ce qu'il comporte au moins un support en forme de disque qui porte la cage d'allumage, la couronne, et un élément d'inertie, et qui est fixé au plateau d'entraînement, pour permettre le montage modulaire de cages d'allumage, couronnes de lancement et éléments d'inertie différents, adaptés chacun à un moteur déterminé, sur des support et plateau d'entraînement communs.

Selon d'autres caractéristiques de l'invention :
- le volant moteur comporte successivement d'avant en arrière, le plateau d'entraînement, la cage d'allumage, la couronne de lancement et le support, et l'élément d'inertie,
- la couronne annulaire et le support forment un sous-ensemble du volant à l'avant duquel sont assemblés par rivetage le plateau d'entraînement et la cage d'allumage, et en arrière duquel est assemblé par rivetage l'élément d'inertie,
- la cage d'allumage comporte un fond transversal qui est percé d'une ouverture destinée à recevoir avec jeu une entretoise annulaire pour assurer l'appui du plateau d'entraînement sur le sous-ensemble du volant,
- le volant moteur comporte des moyens d'indexation angulaire du plateau d'entraînement, de l'entretoise, de la cage d'allumage et de l'élément d'inertie par rapport au sous-ensemble du volant,
- les moyens d'indexation du plateau d'entraînement comportent une rondelle annulaire dont une face arrière est en appui sur une face avant du plateau d'entraînement, et dont au moins une première patte, qui s'étend axialement à partir de sa périphérie extérieure, traverse une fente complémentaire du plateau d'entraînement, l'ouverture du fond de la cage d'allumage et une fente conforme du sous-ensemble, et est repliée, radialement vers l'axe du volant, derrière une face arrière du sous-ensemble du volant,
- les moyens d'indexation de l'entretoise comportent au moins une deuxième patte de la rondelle annulaire, qui s'étend axialement à partir de son ouverture intérieure, traverse une ouverture coaxiale du plateau d'entraînement et une cannelure axiale intérieure de l'entretoise,
- les moyens d'indexation de la cage d'allumage comportent au moins une lumière excentrée qui est pratiquée dans son fond transversal et qui est destinée à être alignée avec au moins une lumière correspondante pratiquée dans le sous-ensemble du volant,
- les moyens d'indexation de l'élément d'inertie comportent au moins des bossages de l'élément d'inertie qui sont reçus dans des évidements d'une face arrière du sous-ensemble du volant,
- l'élément d'inertie est composé d'au moins deux masselottes identiques qui, une fois réunies, présentent sensiblement la forme d'un disque, et qui sont fixées angulairement de façon régulière autour de l'axe du volant moteur,
- la rondelle, le plateau d'entraînement, l'entretoise, la cage d'allumage, le support, et l'élément d'inertie sont réalisés par découpage à plat et emboutissage.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un volant moteur selon l'état de la technique,
- la figure 2 est une vue en perspective éclatée d'un volant moteur selon un premier mode de réalisation de l'invention,
- la figure 3 est une vue en perspective éclatée d'un volant moteur selon un second mode de réalisation de l'invention,
- les figures 4 et 5 sont des vues en coupe, par les plans 4-4 et 5-5 des figures 2 et 3, du volant moteur selon l'un ou l'autre des premier et second modes de réalisation de l'invention, et
- la figure 6 est une vue de détail illustrant la torsion des pattes de la rondelle.

Dans la description qui va suivre, des chiffres de référence identiques désignent des pièces identiques ou ayant des fonctions similaires.

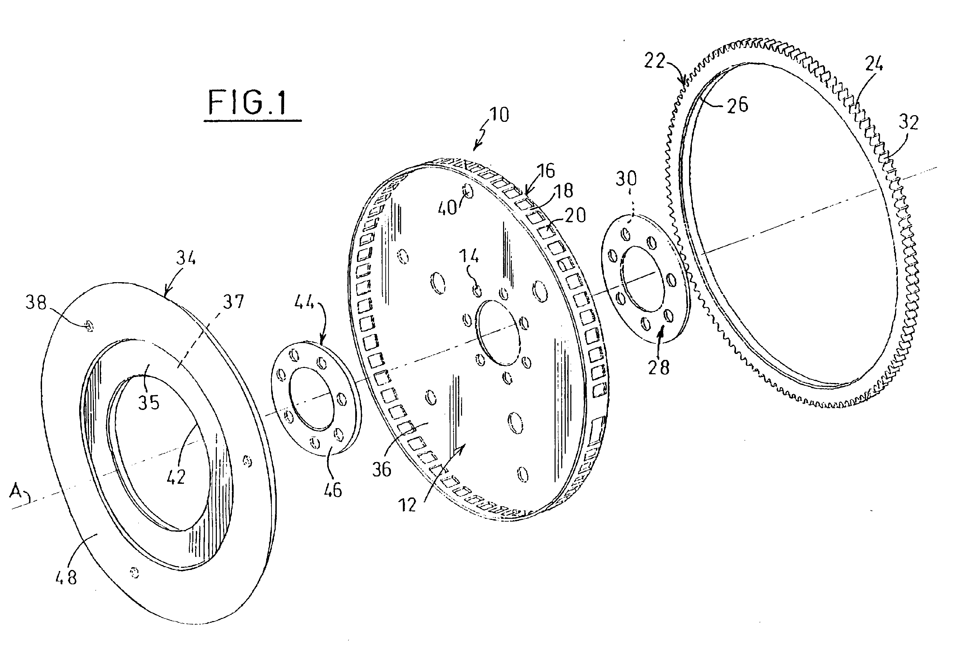

On a représenté à la figure 1 l'ensemble d'un volant moteur 10 pour un moteur thermique à allumage commandé réalisé conformément à un état antérieur de la technique.

De manière connue, le volant moteur 10 est sensiblement axial d'axe A et il est destiné à être fixé, à gauche de la figure 1, à l'arrière d'un vilebrequin (non représenté) d'un moteur thermique du véhicule.

À cet effet, le volant moteur 10 comporte un plateau d'entraînement 12 en forme de disque dont des perçages 14, répartis angulairement de façon régulière autour de l'axe A, permettent le passage de vis (non représentées) de fixation du volant moteur 10 au vilebrequin du moteur.

Le plateau d'entraînement 12 comporte une cage 16 d'allumage cylindrique axiale qui est venue de matière avec le plateau entraînement 12 et qui comporte sur sa périphérie 18 des encoches 20 formant mire pour le réglage de l'allumage du moteur du véhicule.

La fabrication du plateau d'entraînement 12 comporte une étape d'emboutissage sur une ligne de presses, puis une étape de reprise, au cours de laquelle une machine spécifique d'encochage réalise les encoches 20 sur la périphérie 18 de sa cage 16.

Le volant moteur 10 comporte, à l'arrière du plateau d'entraînement 12, une couronne 22 annulaire axiale de lancement qui comporte sur sa périphérie des dents 24 qui sont destinées à engrener avec un pignon d'un démarreur (non représenté). La couronne 22 est, de façon conventionnelle, frettée sur le plateau d'entraînement 12 ou bien est montée à la presse, puis soudée, sur une portée cylindrique (non représentée) qui fait partie par une face arrière du plateau d'entraînement 12.

La couronne annulaire 22 comporte un évidement circulaire 26 intérieur coaxial à l'intérieur duquel est reçue avec jeu, coaxialement à l'axe A, une rondelle 28, aussi appelée gousset, qui affleure dans le plan transversal arrière de la couronne 22, de façon qu'une face arrière 30 de la rondelle 28 et une face arrière 32 de la couronne 22 forment ensemble une surface plane d'appui pour un organe d'accouplement du moteur avec une transmission du véhicule, notamment avec un embrayage ou une coque d'une turbine d'un convertisseur de couple.

Le volant moteur 10 comporte, à l'avant du plateau d'entraînement 12, un volant 34 d'inertie qui est fixé sur une face avant 36 du plateau d'entraînement 12 par l'intermédiaire de vis (non représentées) qui traversent des perçages coaxiaux respectifs 38 du volant 34 d'inertie et 40 et du plateau d'entraînement 12. Le volant d'inertie 34 comporte au moins une partie 35 de diamètre inférieur à celui de la cage cylindrique 16 de façon qu'une face arrière 37 du volant d'inertie soit en appui sur la face avant 36 du plateau d'entraînement 12

Le volant 34 d'inertie comporte une ouverture circulaire 42 intérieure coaxiale à l'intérieur de laquelle est reçue, avec un jeu radial, une rondelle 44 formant gousset qui est coaxiale à l'axe A et qui est de même épaisseur que le volant 34 d'inertie de façon qu'une face avant 46 de la rondelle 44 et une face avant 48 du volant forment ensemble une surface plane d'appui pour une face arrière plane d'un élément supplémentaire lié en rotation au du vilebrequin du moteur du véhicule, comme par exemple un rotor d'une machine électrique formant alternateur et démarreur.

Cette conception présente principalement l'inconvénient de ne pouvoir dissocier le plateau d'entraînement 12, dont la fonction est d'assurer la liaison au vilebrequin du véhicule et qui, à ce titre, pourrait par conséquent assurer cette liaison pour d'autres moteurs de type différents, de la cage d'allumage 16 qui est au contraire spécifique au moteur auquel le volant moteur 10 est destiné.

De plus, la réalisation en une seule pièce du plateau d'entraînement 12 et de la cage 16 d'allumage nécessite la réalisation coûteuse de reprises d'encochage pour réaliser les encoches 20 formant mire d'allumage, ce qui grève considérablement son prix de revient.

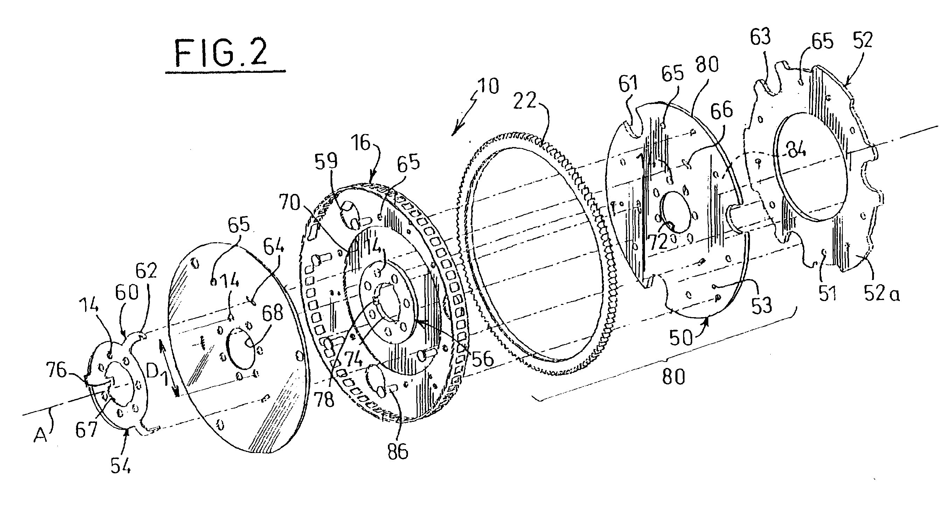

On a représenté aux figures 2 à 5 des premier et second modes de réalisation de l'invention, qui permettent de remédier à ces inconvénients.

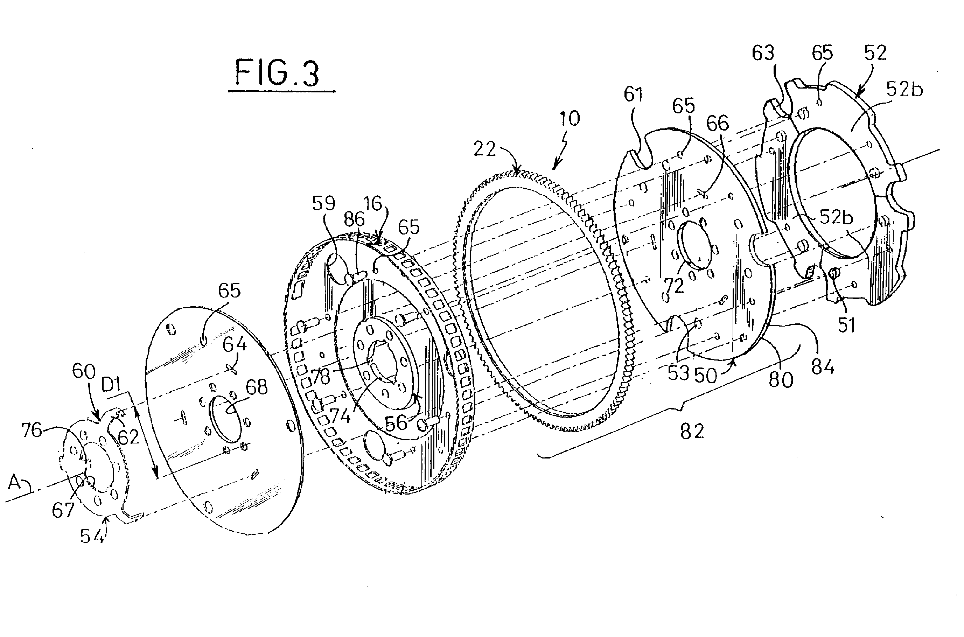

Conformément à l'invention, comme représenté aux figures 2 et 3, le volant moteur 10 comporte au moins un support 50 en forme de disque, qui, d'une part, porte la cage 16 d'allumage, la couronne 22 de lancement, et un élément d'inertie 52, et qui, d'autre part est fixé au plateau 12 d'entraînement pour permettre le montage modulaire de cages d'allumage, de couronnes de lancement et d'éléments d'inertie différents, adaptés chacun à un moteur déterminé, sur un support et un plateau d'entraînement communs.

Une fois ses différents éléments assemblés, le volant moteur 10 est monté à l'extrémité du vilebrequin du moteur.

Plus particulièrement, le volant moteur 10 comporte successivement d'avant en arrière, c'est-à-dire de la gauche vers la droite des figures 2 et 5, une rondelle 54 de fixation du plateau d'entraînement 12 sur le support 50, le plateau d'entraînement 12, la cage 16 d'allumage, une entretoise 56 qui sera décrite ultérieurement plus en détail, la couronne 22 de lancement, le support 50 et enfin l'élément 52 d'inertie.

Lors d'une première étape de fabrication du volant moteur 10, la rondelle 54, le plateau d'entraînement 12, la cage 16 d'allumage, l'entretoise 56, la couronne 22, le support 50, et l'élément 52 d'inertie sont découpés dans des plaques, notamment d'acier, d'épaisseur adéquate.

Lors de cette première étape de découpe, les perçages coaxiaux 14 répartis angulairement de façon régulière selon un premier diamètre D1 autour de l'axe A du volant moteur 10 sont pratiqués dans la rondelle 54, le plateau d'entraînement 12, l'entretoise 56, et le support 50. Ces perçages 14 sont destinés à permettre le passage de vis de fixation du volant moteur 10 sur l'extrémité (non représentée) du vilebrequin du moteur.

Lors de cette première étape de découpe, des perçages 65 coaxiaux répartis angulairement de façon régulière selon un deuxième diamètre D2 autour de l'axe A du volant moteur 10 sont pratiqués dans le plateau d'entraînement 12, la cage 16 d'allumage, le support 50 et l'élément d'inertie 52 pour assurer la fixation de la cage 16 d'allumage, du support 50 et de l'élément d'inertie 52 les uns aux autres par rivetage.

Les perçages 65 du plateau d'entraînement 12 sont d'un diamètre supérieur aux perçages 65 de la cage 16 d'allumage, du support 50 et de l'élément d'inertie 52 de façon à permettre le passage de rivets 86 de fixation sans que ceux-ci ne participent à la liaison du plateau d'entraînement 12, celui-ci étant fixé. comme on le verra ultérieurement, par d'autres moyens à la cage 16 d'allumage, au support 50 et à l'élément d'inertie 52.

Il est aussi prévu au cours de cette première étape de découpe de pratiquer des lumières excentrées respectives 59, 61 et 63 dans la cage 16 d'allumage, dans le support 50, et dans l'élément d'inertie 52, qui permettent l'indexation angulaire de la cage 16 d'allumage et de l'élément d'inertie 52 par rapport au support 50.

La rondelle 54 est d'une forme sensiblement annulaire et comporte au moins une patte 60, initialement radiale, qui s'étend radialement vers l'extérieur. Dans le mode de réalisation préféré de l'invention, la rondelle 54 comporte trois pattes 60 identiques qui sont situées angulairement à 120 degrés les unes des autres. Cette disposition n'est pas limitative de l'invention, et la rondelle 14 peut comporter autant de pattes 60 que nécessaire pour assurer une fixation adéquate du plateau d'entraînement 12 sur le support 50.

Lors de la première étape de découpe, des fentes excentrées 64, réparties angulairement de façon régulière autour de l'axe A, sont pratiquées dans le plateau d'entraînement 12 et des fentes excentrées 66 similaires sont pratiquées dans le support 50. Le plateau d'entraînement 12 et le support 50 comportent autant de fentes 64 et 66 que la rondelle 54 comporte de pattes 60. Ces fentes sont destinées à coopérer avec les pattes 60 de la rondelle 54 pour la fixation du plateau d'entraînement 12 sur le support 50.

Lors de la première étape de découpe, la rondelle 54, le plateau 12 d'entraînement, la cage 16 d'allumage, le support 50 et l'entretoise 56 sont découpés de façon à comporter respectivement des ouvertures intérieures 67, 68, 70, 72, et 74, circulaires et coaxiales à l'axe A.

Les ouvertures circulaires respectives 67, 68, 72 et 74 de la rondelle 54, du plateau 12 d'entraînement, du support 50, et de l'entretoise 56 sont destinés à permettre par exemple, lors de l'assemblage du volant moteur 10 au vilebrequin, le passage d'un épaulement de diamètre inférieur au diamètre D1 du vilebrequin, qui permet le centrage du volant moteur 10. L'ouverture 70 de la cage 16 d'allumage permet le montage de l'entretoise 56.

Lors de la première étape de découpe, des évidements 53 excentrés sont aussi réalisés dans le support 50. Ces évidement 53 sont destinés à coopérer avec l'élément d'inertie 52 pour permettre sa mise en position angulaire.

Par ailleurs, lors de la première étape de découpe, un anneau plan (non représenté) qui est destiné à former la cage 16 d'allumage est obtenu par découpe d'une plaque plane, et les encoches 20 sont pratiquées à cette occasion à plat dans cette anneau plan.

Puis, lors d'une deuxième étape de pliage, les pattes 60 de la rondelle 54 sont repliées en partie vers l'arrière pour former des bras 62 axiaux qui et sont excentrés par rapport à l'axe A. Ces bras 62 sont destinés à coopérer avec les fentes 64 du plateau d'entraînement 12 et les fentes 66 du support 50 pour réaliser l'immobilisation du plateau d'entraînement 12 par rapport au support 50. Ces bras 60 sont notamment d'un diamètre supérieur au diamètre de l'entretoise 56 et inférieur au diamètre de l'ouverture 70 de la cage 16 d'allumage, de sorte qu'ils sont susceptibles de traverser cette ouverture 70 au montage.

La rondelle 54 comporte aussi au moins une patte 76, initialement radiale, qui est réalisée lors de la première étape de découpe, et qui s'étend radialement vers l'intérieur à partir de l'ouverture 67 de la rondelle 54.

Lors de la deuxième étape de pliage, la patte 76 de la rondelle 54 est repliée vers l'arrière pour s'étendre parallèlement à l'axe A. La patte 76 est excentrée par rapport à l'axe A selon le diamètre de l'ouverture 68 intérieure du plateau d'entraînement 12.

Cette patte axiale 76 est destinée, lors du montage, à être reçue dans une cannelure complémentaire 78 de l'entretoise 56, qui est réalisée lors de la première étape de découpe, de façon à immobiliser l'entretoise 56 en rotation par rapport au plateau d'entraînement 12, et donc par rapport au support 50, par l'intermédiaire de la rondelle 54.

Dans le mode de réalisation préféré de l'invention, et de façon non limitative de celle-ci, la rondelle 54 comporte une patte axiale 76 mais elle pourrait comporter un nombre supérieur de pattes qui seraient disposées angulairement à intervalles réguliers.

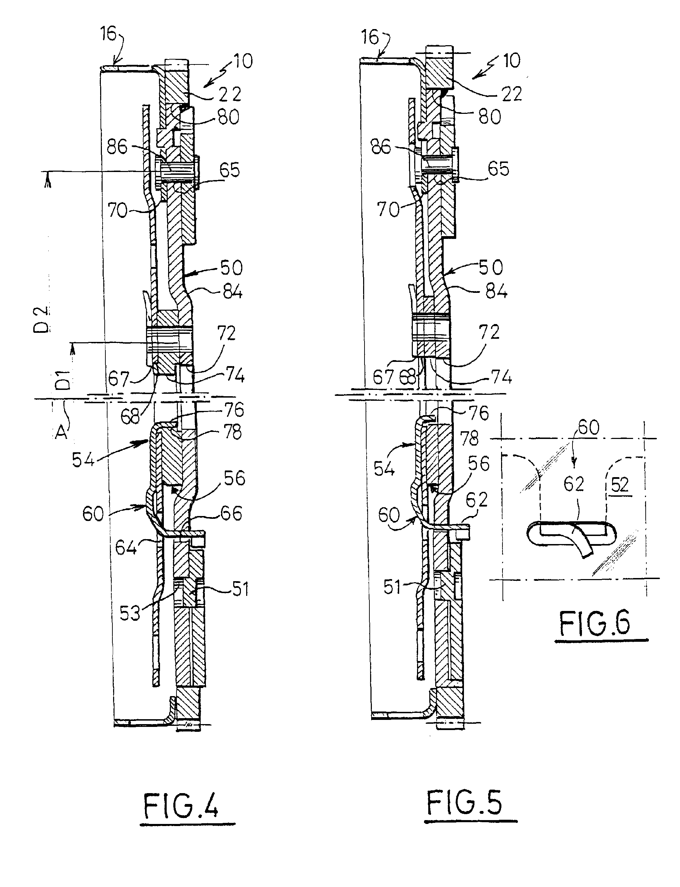

Puis, au cours d'une troisième étape d'emboutissage, l'anneau plan est embouti de façon à former la périphérie 18 de la cage 16 cylindrique qui porte les encoches 20 formant mire pour le réglage de l'allumage du moteur. Au cours de cette même étape, l'élément d'inertie 52 est embouti de façon à comporter des bossages 51 qui sont destinés à coopérer avec les évidements excentrés 53 du support 50 afin de permettre la mise en position angulaire de l'élément d'inertie 52 par rapport au support 50. Les bossages 51 de l'élément d'inertie 52 et les évidements 53 du support 50 sont représentés en détail aux figures 4 et 5.

Au cours de la troisième étape d'emboutissage, le plateau 12 d'entraînement et le support 50 sont aussi emboutis selon une forme de cuvette de façon à limiter leur encombrement axial par rapport à l'ensemble du volant moteur 10.

Puis, au cours d'une quatrième étape de traitement thermique, la couronne 22 annulaire est traitée thermiquement, par exemple par un procédé de trempe, de façon que ses dents 24 présentent des caractéristiques mécaniques permettant une résistance suffisante lors de l'engrènement avec le pignon du démarreur (non représenté) du moteur du véhicule.

Puis, dans une cinquième étape d'assemblage à la presse, la couronne 22 est assemblée sans jeu, par exemple selon un ajustement serré réalisé à la presse, sur la périphérie 80 du support 50, à laquelle elle est soudée lors d'une sixième étape de soudage.

La couronne 22 et le support 50 constituent alors un sous-ensemble 82 du volant auquel peuvent être assemblés les éléments constitutifs restants du volant moteur 10, au cours d'une étape d'assemblage.

Lors de cette septième étape d'assemblage, la cage d'allumage 16 et l'entretoise 56 sont interposées entre le plateau d'entraînement 12 et le support 50 de façon que les lumières excentrées respectives 59, 61 et 63 de la cage 16 d'allumage, du support 50, et de l'élément d'inertie 52 soient alignées.

Avantageusement, les formes de cuvettes embouties du plateau d'entraînement 12 et du support 50 permettent au plateau d'entraînement 50 d'affleurer avec la face avant 36 de la cage 16 d'allumage malgré l'épaisseur de l'entretoise 56, ce qui limite l'encombrement axial total du volant moteur 10.

La rondelle 54 est utilisée pour immobiliser ces éléments. Les bras 62 axiaux de la rondelle 54 pénètrent à cet effet dans les fentes 60 du plateau d'entraînement 12, traversent l'ouverture 70 de la cage d'allumage 16, et pénètrent dans les fentes 66 du support 50, en même temps que la patte 76 axiale de la rondelle 54 traverse l'ouverture 68 du plateau d'entraînement 12, la cannelure 78 de l'entretoise 56 et l'ouverture 72 du support 50. Puis les extrémités des bras 62 axiaux des pattes 60 sont tordues autour de la direction sensiblement axiale des bras 62 de façon que les bras 62 soient bloqués au dos d'une face arrière 84 du sous-ensemble 82, c'est-à-dire au dos de la face arrière 84 du support 50. comme illustré à la figure 6.

L'élément d'inertie 52 est ensuite mis en position par rapport au support 50 à l'aide de ses bossages 51 qui pénètrent dans les évidements 53 en regard du support 50.

Enfin, la cage 16 d'allumage et l'élément 52 d'inertie sont assemblés définitivement au support 50 à l'aide des rivets 86 qui traversent les perçages 65 précédemment décrits.

Le volant moteur peut alors être assemblé à l'extrémité du vilebrequin à l'aide de vis (non représentées) traversant les perçages 14 de la rondelle 54, du plateau 12 d'entraînement, de l'entretoise 56, et du support 50.

A la figure 1, on a représenté un premier mode de réalisation de l'invention dans lequel l'élément d'inertie 52 est constitué d'un disque 52a. Dans ce mode de réalisation, l'élément d'inertie 52 est assemblé d'un seul tenant au support 50.

A la figure 2, on a représenté un second mode de réalisation de l'invention dans lequel l'élément d'inertie 52 est constitué de trois masselottes 52b identiques qui sont réparties à 120 degrés les unes des autres. Conformément à l'invention, chaque masselotte 52b comporte au moins un bossage 51 qui est destiné à pénétrer dans un des évidements 53 du support 50 pour réaliser la mise en position angulaire de l'élément d'inertie par rapport au support 50.

Ce dernier mode de réalisation est particulièrement avantageux car il permet, du fait du jeu réduit qui existe entre deux masselottes 52b consécutives, au niveau de leur tranche 55 de jonction, de mettre en place plus aisément les masselottes au dos de la face arrière 84 du support 50.

Ces dispositions ne sont pas limitatives de l'invention, et l'élément d'inertie 52 pourrait être constitué d'un empilage de disques 52a, de plus de masselottes 52b réparties angulairement, ou d'un empilage de masselottes 52b réparties angulairement alignées ou en quinconce, de façon à ajuster l'inertie de l'élément 52 au plus près d'une inertie déterminée permettant l'équilibrage théorique du vilebrequin du moteur.

L'invention permet donc avantageusement de réaliser un volant moteur 10 modulaire de faible coût.

## Revendications

1. Volant moteur (10) pour un moteur thermique à allumage commandé de véhicule automobile, du type qui est destiné à être fixé à une extrémité arrière d'un vilebrequin axial du moteur du véhicule par l'intermédiaire d'au moins un plateau (12) d'entraînement en forme de disque, du type qui comporte une cage (16) d'allumage cylindrique axiale comportant sur sa périphérie (18) au moins un repère (20) périphérique formant mire pour le réglage de l'allumage, et une couronne (22) annulaire axiale de lancement dont la périphérie est conçue pour coopérer avec un dispositif de démarrage,
caractérisé en ce qu'il comporte au moins un support (50) en forme de disque qui porte la cage (16), la couronne (22), et un élément (52) d'inertie, et qui est fixé au plateau (12) d'entraînement, pour permettre le montage modulaire de cages (16) d'allumage, couronnes (22) de lancement et éléments (52) d'inertie différents, adaptés chacun à un moteur déterminé, sur des support (50) et plateau (12) d'entraînement communs.

2. Volant moteur (10) selon la revendication 1, caractérisé en ce qu'il comporte, successivement d'avant en arrière, le plateau (12) d'entraînement, la cage (16) d'allumage, la couronne (22) de lancement et le support (50), et l'élément (52) d'inertie .

3. Volant moteur (10) selon la revendication précédente, caractérisé en ce que la couronne (22) annulaire et le support (50) forment un sous-ensemble (82) du volant (10) à l'avant duquel sont assemblés par rivetage le plateau (12) d'entraînement et la cage (16) d'allumage, et en arrière duquel est assemblé par rivetage l'élément (52) d'inertie.

4. Volant moteur (10) selon la revendication précédente, caractérisé en ce que la cage (16) d'allumage comporte un fond transversal qui est percé d'une ouverture (70) destinée à recevoir avec jeu une entretoise (56) annulaire pour assurer l'appui du plateau (12) d'entraînement sur le sous-ensemble (82) du volant (10).

5. Volant moteur (10) selon la revendication précédente, caractérisé en ce qu'il comporte des moyens d'indexation angulaire du plateau d'entraînement (12), de l'entretoise (56), de la cage (16) d'allumage et de l'élément (52) d'inertie par rapport au sous-ensemble (82) du volant (10).

6. Volant moteur (10) selon la revendication précédente, caractérisé en ce que les moyens d'indexation du plateau d'entraînement comportent une rondelle (54) annulaire dont une face arrière est en appui sur une face avant du plateau (12) d'entraînement, et dont au moins une première patte (60), qui s'étend axialement à partir de sa périphérie extérieure, traverse une fente (64) complémentaire du plateau d'entraînement, l'ouverture (70) du fond de la cage (16) d'allumage et une fente (66) conforme du sous-ensemble (82), et est repliée. radialement vers l'axe (A) du volant (10), derrière une face arrière du sous-ensemble (82) du volant (10).

7. Volant moteur (10) selon la revendication précédente, caractérisé en ce que les moyens d'indexation de l'entretoise (54) comportent au moins une deuxième patte (76) de la rondelle (54) annulaire, qui s'étend axialement à partir de son ouverture (67) intérieure, traverse une ouverture coaxiale (68) du plateau (12) d'entraînement et une cannelure (78) axiale intérieure de l'entretoise (56).

8. Volant moteur (10) selon l'une quelconque des revendications 5 à 7, caractérisé en ce que les moyens d'indexation de la cage (16) d'allumage comportent au moins une lumière excentrée (59) qui est pratiquée dans son fond transversal et qui est destinée à être alignée avec au moins une lumière (61) correspondante pratiquée dans le sous-ensemble (82) du volant (10).

9. Volant moteur (10) selon l'une quelconque des revendications 5 à 8, caractérisé en ce que les moyens d'indexation de l'élément (52) d'inertie comportent au moins des bossages (51) de l'élément d'inertie qui sont reçus dans des évidements (53) d'une face arrière du sous-ensemble (82) du volant (10).

10. Volant moteur (10) selon l'une quelconque des revendications précédentes, caractérisé en ce que l'élément (52) d'inertie est composé d'au moins deux masselottes (52b) identiques qui, une fois réunies, présentent sensiblement la forme d'un disque, et qui sont fixées angulairement de façon régulière autour de l'axe (A) du volant moteur (10).

11. Volant moteur (10) selon l'une quelconque des revendications 6 à 10, caractérisé en ce que la rondelle (54), le plateau (12) d'entraînement, l'entretoise (56), la cage (16) d'allumage, le support (50), et l'élément (52) d'inertie sont réalisés par découpage à plat et emboutissage.
